# EUROPÄISCHE PATENTANMELDUNG

(11) **EP 2 202 868 A2**
(43) Veröffentlichungstag der Anmeldung: **30.06.2010**
(21) Anmeldenummer: 09179183.0
(22) Anmeldetag: 15.12.2009
(51) Int. Cl.: H02K 5/15

(54) **Antriebsvorrichtung für Komponenten einer Verbrennungskraftmaschine**

(30) Priorität: 16.12.2008 DE 102008062233
(71) Anmelder: Pierburg GmbH, 41460 Neuss (DE)
(72) Erfinder: Oellrich, Detlev, 13349 Berlin (DE); Fukumoto, Isao, 14167 Berlin (DE)
(74) Vertreter: Patentanwälte ter Smitten

(57) **Zusammenfassung**

Antriebsvorrichtung (1) für Komponenten einer Verbrennungskraftmaschine mit einem Elektromotor (2), der im Wesentliche einen Rotor (3), einen Stator (4) und ein Polrohr (5) aufweist, zum Antrieb einer Abtriebswelle (6), der mit seinem von der Abtriebswelle (6) abgewandten Ende in einem Gehäuse (7) gelagert ist und am zur Abtriebswelle (6) gerichteten Ende einen Lagerschild (9) aufweist, wobei der Lagerschild (9) durch Befestigungsmittel (10) mit dem Gehäuse (7) verbunden ist, wobei der Lagerschild (9) Bohrungen (11) für die Befestigungsmittel (10) aufweist, in welche Bohrungen (11) Ansatzstücke (12) des Polrohres (5) derart reichen, dass die vom Elektromotor (2) abgewandten Oberflächen (13, 14) der Ansatzstücke (12) und des Lagerschildes (9) in unterschiedlichen Ebenen liegen, so dass im montierten Zustand der Lagerschild (9) durch die Befestigungsmittel (10) mittels Presssitz mit dem Gehäuse (2) verbunden ist.

## Beschreibung

Die Erfindung betrifft eine Antriebsvorrichtung für Komponenten einer Verbrennungskraftmaschine mit einem Elektromotor, der im Wesentlichen einen Rotor, einen Stator und ein Polrohr aufweist, zum Antrieb einer Antriebswelle, der mit seinem von der Abtriebswelle abgewandten Ende in einem Gehäuse gelagert ist und am zur Abtriebswelle gerichteten Ende einen Lagerschild aufweist, wobei der Lagerschild durch Befestigungsmittel mit dem Gehäuse verbunden ist.

Derartige Antriebsvorrichtungen sind hinlänglich bekannt. So beschreibt die DE 23 37 535 A1 einen Elektromotor, bei dem der Lagerschild mittels Schrauben an einem Rahmen des Elektromotors befestigt ist. Auch die DE 196 02 173 A1 beschreibt einen Elektromotor, der als Stellvorrichtung zu Verwenden ist, und wobei ein Lagerschild mittels Schrauben an einem Gehäuse zu Befestigen ist. Derartige Antriebsvorrichtungen weisen den Nachteil auf, dass sie bei Betrieb der Verbrennungskraftmaschinen erheblichen Erschütterungen ausgesetzt sind. So kann sich ein Lagerschild, das nicht durch zusätzliche Montagemaßnahmen gesichert ist, während des Betriebes der Verbrennungskraftmaschine lösen.

Der Erfindung liegt daher die Aufgabe zu Grunde, eine Antriebsvorrichtung zu verschaffen, die den o. g. Nachteil vermeidet.

Diese Aufgabe wird dadurch gelöst, dass der Lagerschild Bohrungen für die Befestigungsmittel aufweist, in welche Bohrungen Ansatzstücke des Polrohres derart reichen, dass die vom Elektromotor abgewandten Oberflächen der Ansatzstücke und des Lagerschildes in unterschiedlichen Ebene liegen, so dass im montierten Zustand der Lagerschild durch die Befestigungsmittel mittels Presssitz mit dem Gehäuse verbunden ist.

Auf diese Weise wird ohne zusätzliche Bauteile oder zusätzliche Montageprozesse eine Antriebsvorrichtung geschaffen, deren Lagerschild fest mit dem Gehäuse verbunden ist.

Dabei ist es besonders vorteilhaft, wenn die vom Elektromotor abgewandten Oberfläche der Ansatzstücke vor Befestigung gegenüber der Elektromotor abgewandten Fläche des Lagerschildes zurück versetzt angeordnet sind. Auf diese Weise wird der Lagerschild im Bereich der Angriffsfläche des Befestigungsmittel großflächig zusammen gepresst, mit der Folge das der gewünschte Presssitz hergestellt wird. In diesem Zusammenhang ist es besonders vorteilhaft, wenn der Lagerschild aus Kunststoff hergestellt ist. Dabei können die Befestigungsmittel Schrauben mit einem Setzring sein.

Eine besonders einfach zu montierende Antriebsvorrichtung wird geschaffen, wenn die Schrauben ein selbstschneidendes Gewinde besitzen.

Auch ist es denkbar, dass der Lagerschild Vorsprünge aufweist, in denen die Bohrungen angeordnet sind, derart, dass die Befestigungsmittel mit diesen Vorsprüngen korrespondieren.

Darüber hinaus ist es möglich, dass die Ansatzstücke des Polrohres eine Zentrierfunktion für den Lagerschild bilden.

Des Weiteren betrifft die Erfindung ein Verfahren zur Herstellung einer Antriebsvorrichtung, wobei der Elektromotor mit dem Polrohr versehen wird, welches nach außen gerichtete Ansatzstücke aufweist, dass der Elektromotor mittels einer ersten Lagerrichtung in dem Gehäuse gelagert wird, dass das Gehäuse durch den Lagerschild abgeschlossen wird, derart, dass der Lagerschild eine zweite Lagereinrichtung für den Elektromotor bildet, wobei die Ansatzstücke in die Bohrung des Lagerschildes reichen, derart, dass die vom Elektromotor abgewandten Oberflächen der Ansatzstücke und des Lagerschildes in unterschiedlichen Ebenen liegen und dass der Lagerschild mittels Befestigungsmitteln mit dem Gehäuse verbunden wird, wodurch der Lagerschild mittels Presssitz auf dem Gehäuse angeordnet ist.

Nachfolgend wird die Erfindung anhand eines in der Zeichnung dargestellten Ausführungsbeispieles näher erläutert. Hierin zeigt die einzige Figur eine erfindungsgemäße Antriebsvorrichtung in teilweise geschnittener Ansicht.

Die Antriebsvorrichtung 1 ist in teilweise geschnittener Ansicht dargestellt, Ein Elektromotor 2 weist auf bekannte Weise einen Rotor 3, einen Stator 4 sowie ein Polrohr 5 auf. Der Elektromotor 2 treibt auf diese Weise eine Abtriebswelle 6 an, die im vorliegenden Fall die Drosselklappe eines nicht näher dargestellten Drosselklappenstutzens verstellen kann. Es sollte jedoch deutlich sein, dass ein derartig ausgeführter Elektromotor auch weitere Komponenten, wie zum Beispiel Schaltklappen oder auch Pumpenräder antreiben kann. Der Elektromotor 2 ist mit seinem von der Abtriebswelle 6 abgewandten Ende in einem Gehäuse 7 mittels der Lagereinrichtung 8 gelagert. Das Gehäuse 7 weist am zur Abtriebswelle 6 gerichteten Ende einen Lagerschild 9 auf, der durch Befestigungsmittel 10 mit dem Gehäuse 7 verbunden ist.

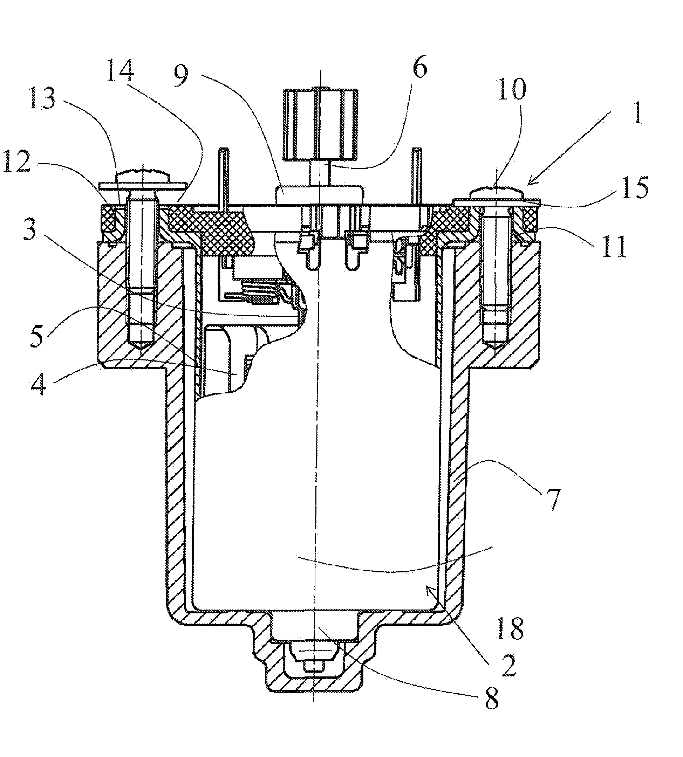

Der aus Kunststoff hergestellte Lagerschild 9 weist zur Befestigung Bohrungen 11 auf. Darüber hinaus reichen in diese Bohrungen Ansatzstücke 12 des Polrohres 5 hinein. Dadurch das die vom Elektromotor 2 abgewandten Oberflächen 13, 14 der Ansatzstücke 12 und des Lagerschildes 9 vor Montage in unterschiedlichen Ebenen liegen (siehe hierzu insbesondere Figur 2) wird im hier gezeigten Zustand der Lagerschild 9 durch die Befestigungsmitel 10 mittels Presssitz mit dem Gehäuse 7 verbunden. Des Weiteren ist zu erkennen, dass die Befestigungsmittel als Schrauben ausgeführt sind, die einen Setzring 15 besitzen.

In der linken Hälfte ist nun die Antriebsvorrichtung 1 gezeigt, bevor der Lagerschild 9 mittels Befestigungsmittel 10 fest mit dem Gehäuse 7 verbunden ist. In der rechten Hälfte ist die erfindungsgemäße Antriebsvorrichtung nach Endmontage gezeigt. Deutlich zu erkennen ist nun im vorliegenden Beispiel in der linken Hälfte, dass die Ansatzstücke 12 in die Bohrungen 11 des Lagerschildes 9 reichen, wobei die vom Elektromotor 2 abgewandten Oberflächen 13 der Ansatzstücke 12 und die Oberflächen 14 des Lagerschildes 9 in unterschiedlichen Ebenen liegen. Im vorliegenden Fall sind die vom Elektromotor 2 abgewandten Oberflächen 13 der Ansatzstücke 12 zurück gesetzt gegenüber der vom Elektromotor 2 abgewandten Oberfläche 14 des Lagerschildes 9 angeordnet. Wenn nun der Lagerschild mittels der Schrauben 10, wie in der rechten Bildhälfte dargestellt, mit dem Gehäuse verbunden wird, wird auf besonders einfache Art und Weise ein Presssitz zwischen dem Lagerschild und dem Gehäuse 7 erzeugt.

Es sollte deutlich sein, dass die Erfindung nicht auf dieses Ausführungsbeispiel beschränkt ist. Auch ist es denkbar, dass die Ansatzstücke gegenüber dem Lagerschild überstehen und auf diese Art und Weise ein Presssitz erzeugt wird.

## Patentansprüche

1. Antriebsvorrichtung (1) für Komponenten einer Verbrennungskraftmaschine mit einem Elektromotor (2), der im Wesentlichen einen Rotor (3), einen Stator (4) und ein Polrohr (5) aufweist, zum Antrieb einer Abtriebswelle (6), der mit seinem von der Abtriebswelle (6) abgewandten Ende in einem Gehäuse (7) gelagert ist und am zur Abtriebswelle (6) gerichteten Ende einen Lagerschild (9) aufweist, wobei der Lagerschild (9) durch Befestigungsmittel (10) mit dem Gehäuse (7) verbunden ist, **dadurch gekennzeichnet, dass** der Lagerschild (9) Bohrungen (11) für die Befestigungsmittel (10) aufweist, in welche Bohrungen (11) Ansatzstücke (12) des Polrohres (5) derart reichen, dass die vom Elektromotor (2) abgewandten Oberflächen (13, 14) der Ansatzstücke (12) und des Lagerschildes (9) in unterschiedlichen Ebenen liegen, so dass im montierten Zustand der Lagerschild (9) durch die Befestigungsmittel (10) mittels Presssitz mit dem Gehäuse (2) verbunden ist.

2. Stellvorrichtung nach Anspruch 1, **dadurch gekennzeichnet, dass** die vom Elektromotor (2) abgewandten Oberflächen (13) der Ansatzstücke (12) vor Befestigung gegenüber der vom Elektromotor (2) abgewandten Oberflächen (14) des Lagerschildes zurück versetzt angeordnet sind.

3. Stellvorrichtung nach Anspruch 1 oder 2, **dadurch gekennzeichnet, dass** der Lagerschild (9) aus Kunststoff hergestellt ist.

4. Antriebsvorrichtung nach einem der Ansprüche 1 bis 3, **dadurch gekennzeichnet, dass** die Befestigungsmittel (10) Schrauben mit einem Setzring sind.

5. Antriebsvorrichtung nach Anspruch 4, **dadurch gekennzeichnet, dass** die Schrauben (10) ein selbstschneidendes Gewinde aufweisen.

6. Antriebsvorrichtung nach einem der vorhergehenden Ansprüche, **dadurch gekennzeichnet, dass** der Lagerschild (9) Vorsprünge aufweist, in denen die Bohrungen (11) angeordnet sind.

7. Antriebsvorrichtung nach einem der vorhergehenden Ansprüche, **dadurch gekennzeichnet, dass** die Ansatzstücke (12) des Polrohres (5) eine Zentrierfunktion für den Lagerschild (9) bilden.

8. Verfahren zur Herstellung einer Antriebsvorrichtung (1) nach zumindest einem der Ansprüche 1 bis 7, **dadurch gekennzeichnet, dass** der Elektromotor (2) mit dem Polrohr versehen wird, welches Polrohr (5) nach außen gerichtete Ansatzstücke (12) aufweist, dass der Elektromotor (2) mittels einer ersten Lagereinrichtung (8) in dem Gehäuse (2) gelagert wird, dass das Gehäuse durch den Lagerschild (9) abgeschlossen wird, derart, dass der Lagerschild eine zweite Lagereinrichtung für die Abtriebswelle (6) des Elektromotors (2) bildet, wobei die Ansatzstücke (12) in die Bohrungen des Lagerschildes reichen, derart, dass die vom Elektromotor (2) abgewandten Oberflächen (13, 14) der Ansatzstücke (12) und des Lagerschildes (9) in unterschiedlichen Ebenen liegen und dass der Lagerschild (9) mittels Befestigungsmittel (10) mit dem Gehäuse (2) verbunden wird, wodurch der Lagerschild mittels Presssitz auf dem Gehäuse (2) angeordnet ist.
